# FASCICULE DE BREVET EUROPEEN

(11) **EP 2 959 809 B1**
(45) Date de publication et mention de la délivrance du brevet: **22.02.2017**
(21) Numéro de dépôt: 15172178.4
(22) Date de dépôt: 15.06.2015
(51) Int. Cl.: A47J 31/54, A47J 31/58

(54) **PROCEDE DE MISE HORS TENSION D'UN APPAREIL DE PREPARATION DE BOISSON CHAUDE**
VERFAHREN ZUM ABSCHALTEN EINES GERÄTS ZUM ZUBEREITEN VON HEISSGETRÄNKEN
METHOD FOR SHUTTING DOWN A DEVICE FOR PREPARING HOT BEVERAGES

(30) Priorité: 24.06.2014 FR 1455859
(43) Date de publication de la demande: 30.12.2015
(73) Titulaire: SEB S.A., 69130 Ecully (FR)
(72) Inventeur: Dumoux, Philippe, 21120 Gemeaux (FR); Petit, Michel, 21000 Dijon (FR)
(74) Mandataire: Bourrières, Patrice

(56) Documents cités:
- EP-A1- 0 171 619
- EP-A1- 1 537 808
- WO-A1-99/39619

## Description

La présente invention concerne de manière générale un appareil de préparation de boisson chaude, tel qu'une cafetière, et en particulier le procédé d'extinction de ces appareils.

Les appareils de préparation de boisson chaude connus dans l'art antérieur disposent d'une chaudière qui consiste en un tube alimenté en eau à partir d'un réservoir et d'une résistance électrique agencée pour chauffer l'eau. Le document FR 2793400 A1 décrit un tel appareil, une cafetière en l'occurrence. En contrepartie, ces systèmes présentent notamment l'inconvénient de consommer de l'énergie inutilement si l'utilisateur oublie d'éteindre l'appareil, et d'autre part, une extinction automatique peut avoir l'inconvénient d'éteindre l'appareil à un mauvais moment, en particulier si toute l'eau contenue dans le réservoir n'a pas pu être chauffée correctement.

Le document EP 1 537 808 A1 décrit également un système de contrôle d'une machine à café.

Un but de la présente invention est de répondre aux inconvénients de l'art antérieur mentionnés ci-dessus et en particulier, tout d'abord, de proposer un procédé de mise hors tension d'un appareil de préparation de boisson chaude, qui évite de laisser l'appareil sous tension inutilement après la préparation de la boisson chaude, sans pour autant risquer d'éteindre l'appareil de manière intempestive si la boisson n'est pas complètement chauffée.

Pour cela un premier aspect de l'invention concerne un procédé de mise hors tension d'un appareil de préparation de boisson chaude, tel qu'une machine à café, et comportant une chaudière alimentée par un circuit de chauffe comportant un dispositif de régulation de la température de la chaudière autour d'une température de consigne qui génère des changements d'état d'alimentation du circuit de chauffe, ledit procédé comprenant les étapes consistant à :
- surveiller un état d'alimentation du circuit de chauffe de la cafetière
- enregistrer le ou les changements d'état d'alimentation du circuit de chauffe
- mettre hors tension la cafetière en fonction du résultat d'un calcul basé sur les enregistrements du ou des changements d'état d'alimentation du circuit de chauffe.

Le procédé selon l'invention éteint automatiquement l'appareil de préparation de boisson chaude, ce qui évite de le laisser sous tension même si l'utilisateur oublie de l'éteindre. Cependant, le procédé tient compte des changements de l'état d'alimentation du circuit de chauffe, qui sont une indication directe d'un état de chauffe complète du liquide contenu dans le réservoir, provoqué par exemple par un entartrage de l'appareil, et le procédé retardera la mise hors tension, afin de chauffer correctement la totalité du liquide à préparer. Le procédé selon l'invention se base sur le nombre de changements d'état d'alimentation du circuit de chauffe pour mettre l'appareil hors tension, car s'il reste du liquide à chauffer, il va y avoir à nouveau des phases d'alimentation du circuit de chauffe ou celles-ci vont être plus fréquentes que lorsque tout le liquide a été chauffé, et le procédé en tient compte pour retarder l'étape de mise hors tension.

Avantageusement, le procédé comprend les étapes consistant à :
- détecter une coupure de l'alimentation du circuit de chauffe de la cafetière,
- mesurer un temps de coupure de l'alimentation du circuit de chauffe, tout en continuant à surveiller l'état d'alimentation du circuit de chauffe,
- si l'état d'alimentation du circuit de chauffe n'a pas changé au bout d'un temps de coupure prédéterminé (tp), envoyer un signal de mise hors tension la cafetière,
- si l'état d'alimentation du circuit de chauffe a changé avant le temps de coupure prédéterminé (tp), retourner à l'étape initiale de surveillance de l'état d'alimentation du circuit de chauffe.

Dans le cas où le fonctionnement du circuit de chauffe de l'appareil, au niveau du dispositif de régulation, est piloté avec un thermostat, le débit de liquide et la puissance de chauffe sont déterminés pour que la température de l'équilibre thermique soit inférieure à la température de calibration (de régulation) du thermostat : le thermostat ne coupe pas l'alimentation pendant le cycle de chauffe du liquide. Le thermostat coupe l'alimentation lorsque la chaudière atteint la température de calibration, dite de régulation, ce qui veut dire que tout le liquide a été chauffé puisque le point d'équilibre thermique a été dépassé.

Lorsque la chaudière est entartrée, la température de l'équilibre thermique devient supérieure à la température de calibration du thermostat même si du liquide reste à chauffer (le liquide à chauffer absorbe les calories moins vite et le cycle de chauffe s'allonge), ainsi, le thermostat coupe l'alimentation pendant le cycle de chauffe du liquide contenu dans le réservoir, et un redémarrage rapide du circuit de chauffage a lieu (avant la fin du temps de coupure prédéterminé) car il reste du liquide à chauffer dans la chaudière. Dans ce cas, le procédé de mise hors tension reprend sa surveillance, comme si le chauffage venait de commencer, et s'il n'y a pas de redémarrage après le temps de coupure prédéterminé cela veut dire que tout le liquide a été effectivement chauffé, alors l'appareil peut être mis hors tension.

Le procédé en question est particulièrement bien adapté à une cafetière qui effectue un chauffage d'eau de manière brève et ponctuelle dans la majeure partie des cas pour faire du café, et que l'on peut ensuite éteindre jusqu'à la prochaine utilisation quelques heures plus tard ou le lendemain.

Alternativement, ledit procédé comprenant les étapes consistant à:
- détecter une coupure de l'alimentation du circuit de chauffe de la cafetière,
- mesurer un nombre de coupures de l'alimentation (np) du circuit de chauffe pendant un temps de coupure prédéterminé (tp),
- si le nombre de coupures est inférieur à un nombre de coupures prédéterminé (np), envoyer un signal de mise hors tension,
- si le nombre de coupures est supérieur ou égal à un nombre de coupures prédéterminé (np), retourner à l'étape initiale de surveillance de l'état d'alimentation du circuit de chauffe.

En alternative d'une régulation du circuit de chauffe avec un thermostat qui coupe l'alimentation lorsque la chaudière atteint une température de consigne, on peut envisager de déterminer le débit de liquide et la puissance de chauffe pour que la température de l'équilibre thermique soit supérieure à la température de régulation du dispositif de régulation: le dispositif coupe l'alimentation du circuit de chauffe de manière régulière pendant le cycle de chauffe du liquide contenu dans le réservoir.

Lorsqu'il n'y a plus de liquide à chauffer, la température descend moins vite et la fréquence de changement d'état d'alimentation diminue, ce qui permet au procédé de déclencher la mise hors tension.

Autrement dit, le procédé comprend :
- une étape de mesure d'une fréquence de changement d'état d'alimentation du circuit de chauffe ;
- une étape de comparaison de la fréquence de changement d'état d'alimentation mesurée avec une première valeur ;
si la fréquence de changement d'état mesurée est inférieure à une première valeur prédéterminée, alors le procédé comprend une étape consistant à envoyer un signal de mise hors tension, sinon, le procédé retourne à l'étape de mesure de la fréquence de changement d'état d'alimentation.

Avantageusement, le procédé comprend :
- une étape de comparaison de la fréquence de changement d'état d'alimentation mesurée avec une deuxième valeur,
si la fréquence de changement d'état mesurée est supérieure à une deuxième valeur prédéterminée, alors le procédé comprend une étape consistant à envoyer un signal d'information sur un possible entartrage de l'appareil de préparation de boisson chaude, sinon, le procédé retourne à l'étape de mesure de la fréquence de changement d'état d'alimentation.

Lorsque la chaudière est entartrée, le liquide absorbe les calories moins vite : ainsi, les coupures d'alimentation sont plus fréquentes. Par exemple, on peut avoir en mode de chauffe normale 3 coupures d'alimentation en un temps de 3 minutes. En mode de chauffe entartré, on peut compter 4 coupures en un temps de 3 minutes. En d'autres termes, si l'appareil est entartré, plusieurs redémarrages rapides de l'alimentation du circuit de chauffage ont lieu lorsque le liquide à préparer n'est pas à la bonne température (avant la fin du temps de coupure prédéterminé), et le procédé de mise hors tension reprend sa surveillance, comme si le chauffage venait de commencer, et s'il y a très peu de redémarrage(s) après le temps de coupure prédéterminé (ce qui veut dire qu'il n'y a plus de liquide à préparer froid), alors l'appareil peut être mis hors tension.

Avantageusement, les étapes de changement de l'état d'alimentation du circuit de chauffe sont pilotées par un thermostat bimétallique ou un capteur de température et un relai du dispositif de régulation.

Avantageusement, l'appareil de préparation de boisson chaude est du type pot isotherme, et la mise hors tension est effectuée immédiatement après l'envoi du signal de mise hors tension. Le procédé selon cette mise en oeuvre peut opérer immédiatement l'arrêt de l'appareil, car le pot isotherme (ou thermos, ou encore du type vase Dewar) permet de limiter les échanges de chaleur et de conserver la boisson à une température idéale de consommation même sans alimentation ou maintien au chaud actif.

Avantageusement, l'appareil de préparation de boisson chaude est du type pot de verre, et la mise hors tension est effectuée après l'écoulement d'un deuxième temps prédéterminé à partir de l'envoi du signal de mise hors tension, le deuxième temps prédéterminé étant supérieur au premier temps de coupure prédéterminé. Le procédé selon cette mise en oeuvre prend en compte la spécificité de l'appareil où la boisson chaude est stockée dans un pot à paroi de verre ou à simple paroi métallique (avec donc des échanges thermiques importants), qu'il faut alors garder chaud le temps que toute la boisson soit consommée, c'est-à-dire pendant le deuxième temps prédéterminé. On peut noter qu'une fois que le premier temps de coupure s'est écoulé sans redémarrage du circuit de chauffe, l'extinction est programmée et sera effectuée.

Avantageusement, le deuxième temps est supérieur à vingt minutes. Idéalement, le deuxième temps de chauffe est de trente minutes, plus ou moins cinq minutes.

Avantageusement, le premier temps de coupure prédéterminé est compris entre deux et cinq minutes, bornes incluses, et plus préférentiellement entre deux minutes trente secondes et trois minutes trente secondes, bornes incluses.

Avantageusement, il est prévu une étape consistant à avertir l'utilisateur d'un possible entartrage si l'état d'alimentation du circuit de chauffe a changé avant le temps de coupure prédéterminé, simultanément à l'étape de retour à l'étape initiale de surveillance de l'état d'alimentation du circuit de chauffe. Astucieusement, le procédé, qui a indirectement détecté la présence de tartre, prévoit une étape d'information vers l'utilisateur. On peut envisager d'allumer une diode en façade de l'appareil par exemple.

Un deuxième aspect de l'invention concerne un appareil de préparation de boisson chaude, tel qu'une machine à café, comprenant :
- une chaudière alimentée par un circuit de chauffe comportant un dispositif de régulation de la température de la chaudière autour d'une température de consigne qui génère des changements d'état d'alimentation du circuit de chauffe ;
- une unité de surveillance de l'alimentation du circuit de chauffe ;
caractérisé en ce que l'unité de surveillance est agencée pour enregistrer le ou les changements d'état d'alimentation du circuit de chauffe, et en ce que l'appareil comprend un circuit de commande, connecté à l'unité de surveillance et agencé pour mettre hors tension l'appareil en fonction du résultat d'un calcul basé sur les enregistrements du ou des changements d'état d'alimentation du circuit de chauffe.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un graphique montrant l'alimentation d'un circuit de chauffe d'un appareil de préparation de boisson chaude mettant en oeuvre le procédé selon l'invention, dans le cas où il est peu ou pas entartré ;
- la figure 2 représente un graphique montrant l'alimentation d'un circuit de chauffe de l'appareil de préparation de boisson chaude de la figure 1 mettant en oeuvre le procédé selon l'invention, dans le cas où il est entartré ;
- la figure 3 représente un graphique montrant l'alimentation d'un circuit de chauffe d'un autre appareil de préparation de boisson chaude mettant en oeuvre une alternative du procédé selon l'invention, dans le cas où il est peu ou pas entartré ;
- la figure 4 représente un graphique montrant l'alimentation d'un circuit de chauffe de l'autre appareil de préparation de boisson chaude mettant en oeuvre l'alternative du procédé selon l'invention, dans le cas où il est entartré.

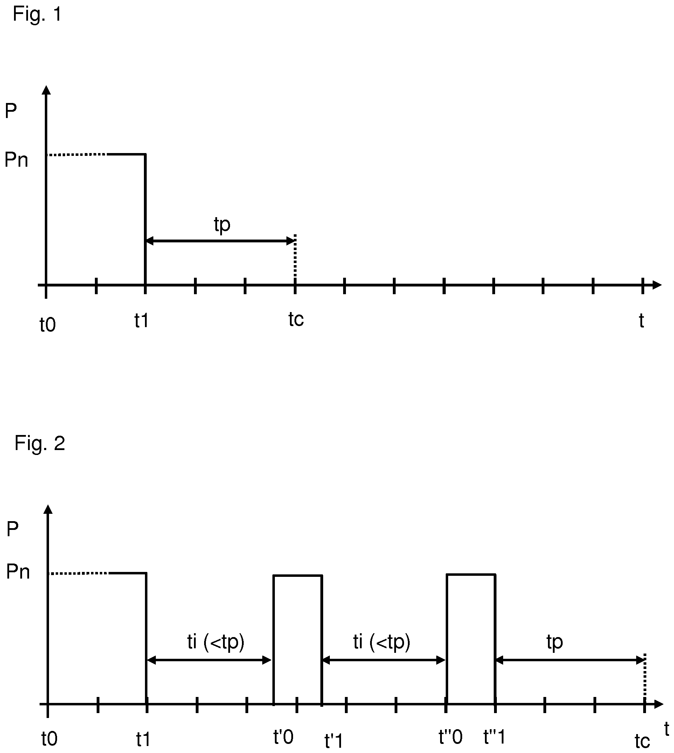

La figure 1 représente un graphique avec une puissance P consommée par un circuit de chauffe d'un appareil de préparation de boisson chaude selon l'invention (ici, une cafetière), en fonction du temps t. L'appareil comprend un réservoir d'eau et l'eau arrive par gravité du réservoir dans un tube chauffé. L'eau est chauffée vers l'ébullition. La vapeur produite expulse vers un porte filtre un mélange d'eau chaude et de vapeur. Une fois ce mélange expulsé, de l'eau froide prend la place dans le tube et le cycle de chauffe continue tant qu'il y a de l'eau dans le réservoir.

Le principe de régulation du circuit de chauffe est ici basé sur un thermostat, notamment un thermostat bimétallique. Le débit d'eau et la puissance de chauffe sont déterminés pour que la température de l'équilibre thermique soit inférieure à la température de calibration (de régulation) du thermostat : le thermostat ne coupe pas l'alimentation pendant le cycle de chauffe du liquide. Le thermostat coupe l'alimentation lorsqu'il n'y a plus d'alimentation en liquide à chauffer depuis le réservoir, ce qui fait atteindre la température de calibration, dite de régulation qui provoque la coupure de l'alimentation.

L'appareil de préparation de boisson chaude est peu ou pas entartré, donc le chauffage du liquide à chauffer est efficace. C'est-à-dire que l'appareil est allumé au temps t0 et chauffe le liquide jusqu'au temps t1, temps auquel le réservoir est vide et où on atteint la température de consigne.

A ce moment là, le thermostat se déclenche et coupe l'alimentation du circuit de chauffe. La puissance consommée passe de Pn à zéro, ce qui constitue un changement de l'état d'alimentation et un compteur de temps est alors déclenché, pour mesurer le temps de coupure de l'alimentation du circuit de chauffe.

Au bout d'un temps de coupure prédéterminé tp de trois minutes par exemple, le procédé mis en oeuvre par l'appareil de préparation de boisson chaude coupe l'alimentation générale de l'appareil et le met hors tension. Ainsi, la mise hors tension est automatique, ce qui permet d'économiser de l'énergie, même si l'utilisateur oublie d'éteindre lui-même l'appareil.

La figure 2 représente le graphique de puissance P consommée par le circuit de chauffe d'un appareil de préparation de boisson chaude selon l'invention, en fonction du temps t, et lorsque l'appareil est entartré.

En raison de la couche de tartre entre l'eau et les moyens de chauffe de l'appareil (une résistance électrique en général), les échanges de chaleur sont moins efficaces et la puissance fournie par les moyens de chauffe n'est pas absorbée par le liquide à chauffer de manière optimale.

En d'autres termes, il y a encore du liquide dans le réservoir qui alimente le tube chauffé, mais en raison de la barrière thermique formée par le tartre, on atteint quand même la température de consigne, alors le thermostat coupe l'alimentation du circuit de chauffe au temps t1, bien qu'il reste de l'eau à chauffer.

Comme pour le cas représenté à la figure 1, cette coupure à t1 forme un changement de l'état d'alimentation du circuit de chauffe, et le compteur de temps est déclenché pour mesurer le temps de coupure de l'alimentation du circuit de chauffe.

Cependant, comme il reste du liquide à chauffer, la température redescend rapidement à une température inférieure à la température de régulation et le thermostat responsable de la coupure de l'alimentation du circuit de chauffe au temps t1 se réenclenche au temps t'0. Comme la différence de temps intermédiaire ti= (t'0-t1) est inférieure au temps de coupure prédéterminée tp, le procédé n'a pas mis l'appareil hors tension, et dans ce cas, aucune consigne de mise hors tension n'est envoyée. Le procédé de mise hors tension est réinitialisé, comme si l'appareil venait d'être mis en service.

Le circuit de chauffe est alimenté jusqu'au temps t'1, où une coupure de l'alimentation est à nouveau effectuée. Cela a pour effet de lancer à nouveau le compteur de temps de coupure pour mesurer le temps de coupure.

Cependant, il reste du liquide à chauffer, et la température globale redescend en dessous de la température de consigne du thermostat, qui réenclenche l'alimentation du circuit de chauffe au temps t"0, tel que le temps intermédiaire ti=(t"0-t'1) est encore inférieur au temps de coupure prédéterminé. Le procédé de mise hors tension est à nouveau réinitialisé et le circuit de chauffe est alimenté jusqu'au temps t"1.

A ce moment là, le compteur de temps de coupure est à nouveau lancé pour mesurer le temps de coupure de l'alimentation du circuit de chauffe. Tout le liquide a été suffisamment chauffé, si bien que le thermostat ne réenclenche pas l'alimentation du circuit de chauffe au bout du temps de coupure prédéterminé et donc le procédé de mise hors tension peut lancer l'extinction générale de l'appareil.

On peut distinguer deux types de procédure d'extinction. Dans le cas où le liquide chaud est stocké dans une enceinte isotherme (pot thermos, vase du type Dewar), alors le procédé peut immédiatement mettre l'appareil de préparation de boisson chaude hors tension.

Cependant, si le liquide chaud est stocké dans un simple pot en verre, ou en métal simple paroi, alors on peut continuer à alimenter l'appareil et en particulier une plaque de maintien au chaud pendant un deuxième temps prédéterminé, de trente minutes par exemple.

On peut envisager dans le cas présent d'avertir l'utilisateur dès le temps t'0 que l'appareil commence à être entartré, en commandant l'allumage d'un voyant sur l'appareil.

Le procédé selon l'invention, avec la scrutation pendant trois minutes d'un éventuel redémarrage de l'alimentation du circuit de chauffe de la chaudière de l'appareil avant extinction, permet de mettre hors tension l'appareil dans un délai relativement court (trois minutes), mais permet d'éviter de mettre hors tension si le tout le liquide n'a pas été chauffé, à cause d'un entartrage qui provoque un redémarrage de l'alimentation du circuit de chauffe avant les trois minutes, et une réinitialisation du procédé de mise hors tension.

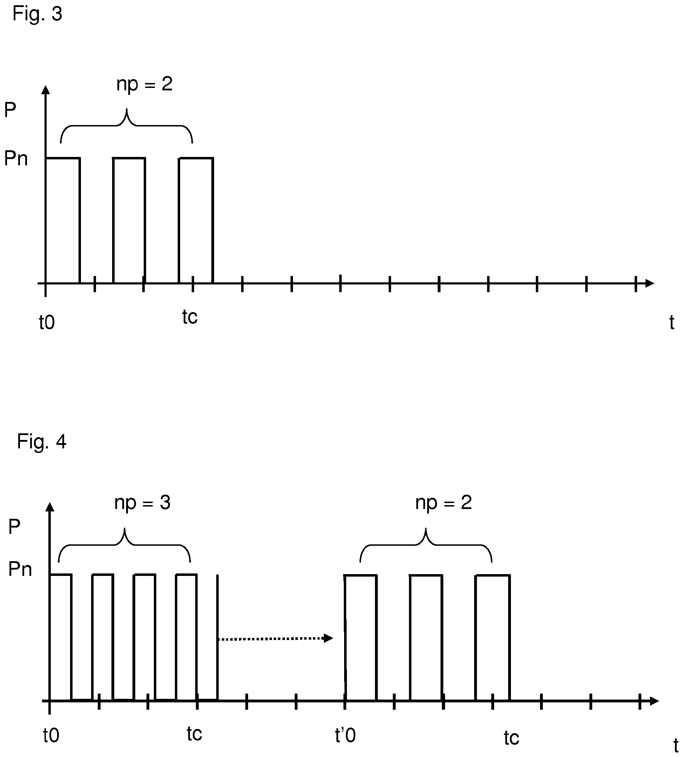

La figure 3 représente un graphique de l'alimentation d'un circuit de chauffe d'un autre appareil de préparation de boisson chaude, utilisant une variante du procédé selon l'invention.

Ici, l'appareil de préparation de boisson chaude, toujours une cafetière, présente une autre régulation du circuit de chauffe. Le débit de l'eau et la puissance de chauffe sont déterminés pour que la température de l'équilibre thermique soit supérieure à la température de régulation du dispositif de régulation : le dispositif coupe l'alimentation de manière régulière pendant le cycle de chauffe de l'eau contenue dans le réservoir. Lorsque le réservoir est vide, la température du tube chauffé redescend plus lentement (il n'y a plus d'eau froide qui arrive), et la fréquence des coupures diminue.

Le procédé selon l'invention compte alors le nombre de coupures np pendant un temps prédéterminé tp de trois minutes, et si le nombre np est inférieur ou égal à 2 par exemple, alors le procédé lance l'étape de mise hors tension.

Le diagramme de la figure 4 représente les coupures dans le cas où la machine est entartrée. Les échanges thermiques ne sont pas efficaces, et le tube chauffé voit sa température augmenter rapidement, car le tartre agit comme une barrière thermique vers l'eau. Cependant, dès que l'alimentation est coupée, la température redescend rapidement, et l'alimentation est à nouveau enclenchée. La fréquence des coupures est supérieure au cas où la machine n'est pas entartrée et encore plus supérieure au cas où il n'y a plus de liquide à chauffer. Lors d'une coupure à partir du temps t0, le procédé compte le nombre de coupures pendant le temps prédéterminé tp : il est supérieur à 2 donc indicatif d'une machine en fonctionnement normal ou entartrée. Le procédé est réinitialisé, jusqu'à ce qu'au temps t'0, il n'y ait plus d'eau : le nombre de coupures np pendant le temps tc après t'0 est de 2, alors le procédé peut lancer la mise hors tension de l'appareil de préparation de boisson chaude.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence d'une machine à café, mais on peut envisager de mettre en oeuvre le procédé décrit sur une machine à thé ou à infusion, ou tout autre appareil de chauffage d'eau.

## Revendications

1. Procédé de mise hors tension d'un appareil de préparation de boisson chaude, tel qu'une machine à café, et comportant une chaudière alimentée par un circuit de chauffe comportant un dispositif de régulation de la température de la chaudière autour d'une température de consigne qui génère des changements d'état d'alimentation du circuit de chauffe, ledit procédé comprenant les étapes consistant à :
- surveiller un état d'alimentation du circuit de chauffe de la cafetière
- détecter une coupure de l'alimentation du circuit de chauffe de la cafetière,
- mesurer un temps de coupure de l'alimentation du circuit de chauffe, tout en continuant à surveiller l'état d'alimentation du circuit de chauffe,
- si l'état d'alimentation du circuit de chauffe n'a pas changé au bout d'un temps de coupure prédéterminé (tp), envoyer un signal de mise hors tension la cafetière,
- si l'état d'alimentation du circuit de chauffe a changé avant le temps de coupure prédéterminé (tp), retourner à l'étape initiale de surveillance de l'état d'alimentation du circuit de chauffe.

2. Procédé selon la revendication 1, dans lequel le premier temps de coupure prédéterminé est compris entre deux et cinq minutes, bornes incluses, et plus préférentiellement entre deux minutes trente secondes et trois minutes trente secondes, bornes incluses.

3. Procédé selon l'une quelconque des revendications précédentes, dans lequel les étapes de changement de l'état d'alimentation du circuit de chauffe sont pilotées par un thermostat bimétallique ou un capteur de température et un relais du dispositif de régulation.

4. Procédé selon l'une quelconque des revendications précédentes, dans lequel l'appareil de préparation de boisson chaude est du type pot isotherme, et dans lequel la mise hors tension est effectuée immédiatement après l'envoi du signal de mise hors tension.

5. Procédé selon l'une quelconque des revendications 1 à 3, dans lequel l'appareil de préparation de boisson chaude est du type pot de verre, et dans lequel la mise hors tension est effectuée après l'écoulement d'un deuxième temps prédéterminé à partir de l'envoi du signal de mise hors tension, le deuxième temps prédéterminé étant supérieur au premier temps de coupure prédéterminé.

6. Procédé selon la revendication précédente, dans lequel le deuxième temps est supérieur à vingt minutes.

7. Procédé selon la revendication 1, dans lequel il est prévu une étape consistant à avertir l'utilisateur d'un possible entartrage si l'état d'alimentation du circuit de chauffe a changé avant le temps de coupure prédéterminé, simultanément à l'étape de retour à l'étape initiale de surveillance de l'état d'alimentation du circuit de chauffe.

## Patentansprüche

1. Verfahren zum Abschalten der Spannung eines Gerätes zur Heißgetränkzubereitung, wie einer Kaffeemaschine, das einen Kessel umfasst, der durch einen Heizkreis versorgt wird, der eine Regelvorrichtung für die Einstellung der Temperatur des Kessels um eine Solltemperatur umfasst, welche Veränderungen des Versorgungszustandes des Heizkreises bewirkt, wobei dieses Verfahren die folgenden Schritte umfasst:
- Überwachen des Versorgungszustands des Heizkreises der Kaffeemaschine
- Erkennen der Abschaltung der Stromversorgung des Heizkreises der Kaffeemaschine,
- Messen einer Abschaltzeit der Stromversorgung des Heizkreises bei gleichzeitiger Fortsetzung der Überwachung des Versorgungszustands des Heizkreises,
- Übermitteln eines Signals zum Abschalten der Kaffeemaschine, wenn sich der Versorgungszustand des Heizkreises nach einer vorgegebenen Abschaltzeit (tp) nicht verändert hat,
- Zurückkehren zum ersten Schritt der Überwachung des Versorgungszustandes des Heizkreises, wenn sich der Versorgungszustand des Heizkreises vor der vorgegebenen Abschaltzeit (tp) verändert hat.

2. Verfahren nach Anspruch 1, bei dem die erste vorgegebene Abschaltzeit zwischen zwei und fünf Minuten, Grenzwerte eingeschlossen, und vorzugsweise zwischen zwei Minuten dreißig Sekunden und drei Minuten dreißig Sekunden dauert, Grenzwerte eingeschlossen.

3. Verfahren nach einem der vorhergehenden Ansprüche, bei dem die Veränderungsschritte des Versorgungszustands des Heizkreises durch ein Bimetall-Thermostat oder einen Temperatursensor und ein Relais der Regelvorrichtung gesteuert werden.

4. Verfahren nach einem der vorhergehenden Ansprüche, bei dem das Gerät zur Heißgetränkzubereitung eine Thermoskanne ist und bei dem das Abschalten der Spannung unmittelbar nach der Übermittlung des Abschaltsignals erfolgt.

5. Verfahren nach einem der Ansprüche 1 bis 3, bei dem das Gerät zur Heißgetränkzubereitung eine Glaskanne ist und bei dem das Abschalten der Spannung nach Ablauf einer zweiten vorgegebenen Zeit erfolgt, die mit der Übermittlung des Abschaltsignals beginnt, wobei die zweite vorgegebene Zeit länger ist als die erste vorgegebene Abschaltzeit.

6. Verfahren nach dem vorhergehenden Anspruch, bei dem die zweite Zeit länger als zwanzig Minuten dauert.

7. Verfahren nach Anspruch 1, bei dem ein Schritt vorgesehen ist, der darin besteht, dass der Nutzer auf eine mögliche Kalkablagerung aufmerksam gemacht wird, wenn sich der Versorgungszustand des Heizkreises vor der vorgegebenen Abschaltzeit verändert, und der zeitgleich mit der Rückkehr zum ersten Schritts der Überwachung des Heizkreises erfolgt.

## Claims

1. A method for switching off a hot beverage preparation appliance, such as a coffee machine, comprising a boiler powered by a heating circuit comprising a device for regulating the boiler temperature around a setpoint temperature which generates changes in the power state of the heating circuit, said method comprising the steps of:
- monitoring a power state of the coffee maker heating circuit,
- detecting a power cut-off of the coffee maker heating circuit,
- measuring a power cut-off time of the heating circuit, while continuing to monitor the power state of the heating circuit,
- if the power state of the heating circuit has not changed after a predetermined cut-off time (tp), sending a signal to switch off the coffee maker,
- if the power state of the heating circuit has changed before the predetermined cut-off time (tp), returning to the initial step of monitoring the power state of the heating circuit.

2. Method according to claim 1, wherein the first predetermined cut-off time is between two and five minutes, inclusive, and more preferably between two minutes thirty seconds and three minutes thirty seconds, inclusive.

3. Method according to any one of the preceding claims, wherein the steps of changing the power state of the heating circuit are controlled by a bimetallic thermostat or a temperature sensor and a relay of the regulation device.

4. Method according to any one of the preceding claims, wherein the hot beverage preparation appliance is of the insulated pot type, and wherein the appliance is switched off immediately after sending the switching-off signal.

5. Method according to any one of claims 1 to 3, wherein the hot beverage preparation appliance is of the glass pot type, and wherein switching off is carried out after a second predetermined time after sending the switching-off signal, the second predetermined time being greater than the first predetermined cut-off time.

6. Method according to the preceding claim, wherein the second time is greater than twenty minutes.

7. Method according to claim 1, wherein a step is provided which consists in warning the user of possible scaling if the power state of the heating circuit has changed before the predetermined cut-off time, simultaneously with the step of returning to the initial step of monitoring the power state of the heating circuit.
